# EUROPEAN PATENT APPLICATION

(11) **EP 2 112 825 A2**
(43) Date of publication of application: **28.10.2009**
(21) Application number: 09158414.4
(22) Date of filing: 22.04.2009
(51) Int. Cl.: H04N 5/60

(54) **Television receiver**

(30) Priority: 24.04.2008 JP 2008114672
(71) Applicant: Funai Electric Co., Ltd., Daito-shi, Osaka 574-0013 (JP)
(72) Inventor: Kobayashi, Tatsuyoshi, Daito-shi Osaka 574-0013 (JP)
(74) Representative: Grünecker, Kinkeldey, Stockmair & Schwanhäusser Anwaltssozietät

(57) **Abstract**

A television receiver includes: a remote control that is operated by a user to change the orientation of a speaker; a speaker angle adjuster having a motor providing a driving force for changing the orientation of the speaker in four directions, up, down, left, and right; and a controller that changes the orientation of the speaker in the four directions, up, down, left, and right by the speaker angle adjuster when the remote control is operated by a user. The remote control has four operation portions corresponding to the four directions, up, down, left, and right. The four operation portions are combined as a cross-shaped arrow key.

## Description

### BACKGROUND OF THE INVENTION

### 1. Field of the Invention

The present invention relates to a television receiver that receives television signals distributed from broadcast stations to reproduce images and audio based on the television signals.

### 2. Description of the Related Art

Conventionally, television receivers display images based on television signals (TV program images) on a display while outputting audio based on the television signals (TV program audio) from a speaker. Some of the television receivers allow a user to change the orientation of the speaker in the horizontal direction. For example, Japanese Laid-open Patent Publication No. 2000-244845 discloses a television receiver that allows a user to adjust the orientation of the speaker by operating a remote control.

Japanese Laid-open Patent Publication No. 2005-295411 discloses an audio device that determines the direction in which a remote control is present so as to be able to alter the directionality of an ultrasonic speaker depending on the determined direction of the remote control. Japanese Laid-open Patent Publication No. HEI 9-93690 discloses an audio device designed to determine the position of a remote control and direct a speaker toward the remote control.

When a user watches a TV program on a television receiver, the user is not always in front of the television receiver (in front of the display). In other words, a user watching a TV program may be at a position shifted upward, downward, or to the left or right from in front of the television receiver. In such a situation, in order for a user to listen to the TV program audio well, the user needs to turn up the volume.

In some situations, a user who desires to watch a TV program and a user who does not desire to watch the TV program may be present in the same room where a television receiver is placed. In this situation, if the volume is adjusted so that the user watching the TV program can listen to the audio well, the other user, who is not watching the TV, may feel that the TV program audio is loud. On the other hand, if the volume is adjusted so as not to annoy the user who is not watching the TV program, the user watching the TV program may be unable to listen to the audio well.

In order to solve the above described problem, there is a need for a speaker allowing the orientation to be changed in four directions, up, down, left, and right, so that a user (a user who is watching a TV program or a user who is not watching the TV program) can change the orientation of the speaker in the four directions, up, down, left, and right, to adjust the sound emission direction to a desired direction. Further, when a user adjusts the sound emission direction by changing the orientation of the speaker, it is desirable for the user to be able to make the adjustment easily. The above mentioned patent documents do not describe changing the orientation of a speaker in four directions, up, down, left, and right. Therefore, even if the techniques described in the above mentioned patent documents are applied, the above described problem cannot be solved.

### SUMMARY OF THE INVENTION

An object of the present invention is to provide a television receiver that allows a user to easily adjust the sound emission direction to a desired direction.

A television receiver according to an aspect of the present invention receives television signals distributed from a broadcast station, and displays images based on the television signals on a display while outputting audio based on the television signals from a speaker. The television receiver comprises: operation means that is operated by a user to change an orientation of the speaker; and speaker orientation changing means for changing the orientation of the speaker in four directions, up, down, left, and right, when the operation means is operated.

In the television receiver configured as described above, by operating the operation means, a user can change the orientation of the speaker in the four directions, up, down, left, and right, to adjust the sound emission direction to a desired direction. Accordingly, when a user watching a TV program is at a position shifted from in front of the television receiver, a user can direct the speaker toward the user watching the TV program, thereby appropriately adjusting the sound emission direction so that the user can listen to the TV program audio better without turning up the volume. Further, when a user who is watching a TV program and a user who is not watching the TV program are present in the same room where the television receiver is placed, a user can direct the speaker toward the user watching the TV program or direct the speaker away from the user who is not watching the TV program. Thereby, the user can appropriately adjust the sound emission direction so as to allow the user who is watching the TV program to listen to the audio well while preventing the user who is not watching the TV program from being annoyed. Besides, with easy operation on the operation means, a user can change the orientation of the speaker for adjustment of the sound emission direction.

Preferably, the operation means has four operation portions corresponding to the four directions, up, down, left, and right, that are directions of change in the orientation of the speaker; and when one of the four operation portions is operated, the speaker orientation changing means changes the orientation of the speaker in a direction corresponding to the operated operation portion. Thereby, when a user operates an operation portion, the orientation of the speaker is changed in the direction corresponding to the operated operation portion. Thus, with easier operation, a user can change the orientation of the speaker in a desired direction for adjustment of the sound emission direction.

Preferably, the four operation portions are adapted to be depressed individually; and while one of the four operation portions is depressed, the speaker orientation changing means continues to change the orientation of the speaker in a direction corresponding to the operation portion being depressed, and when the depressed operation portion is released, the speaker orientation changing means stops changing the orientation of the speaker. With this configuration, while a user continuously depresses an operation portion, the orientation of the speaker is continuously changed in the direction corresponding to the operation portion being depressed. Accordingly, with easier operation, a user can change the orientation of the speaker by a desired angle to adjust the sound emission direction.

Preferably, each time one of the four operation portions is pressed, the speaker orientation changing means changes the orientation of the speaker by a predetermined angle in a direction corresponding to the pressed operation portion. With this configuration, each time a user presses an operation portion, the orientation of the speaker is changed by the predetermined angle in the direction corresponding to the pressed operation portion. Accordingly, with easier operation, a user can change the orientation of the speaker by a desired angle to adjust the sound emission direction.

Preferably, the four operation portions are combined as a cross-shaped arrow key. This allows a user to easily understand the relation between the directions of change in the orientation of the speaker and the operation portions. Accordingly, a user can more easily change the orientation of the speaker in a desired direction for adjustment of the sound emission direction.

Preferably, the speaker includes a plurality of speakers; and when the operation means is operated, the speaker orientation changing means changes orientations of the plurality of speakers individually for each speaker. This allows a user to adjust the sound emission direction more appropriately.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:
FIG 1 is a schematic front view of a television receiver according to one embodiment of the present invention;
FIG 2 is a schematic plan view of a remote control for the television receiver; and
FIG 3 is an electrical block diagram of the television receiver;

### DESCRIPTION OF THE PREFERRED EMBODIMENTS

Referring now to the accompanying drawings, a television receiver embodying the present invention is described. It is to be noted that the following description of preferred embodiment of the present invention has been presented for purposes of illustration and description, and is not intended to be exhaustive or to limit the present invention to the precise form disclosed.

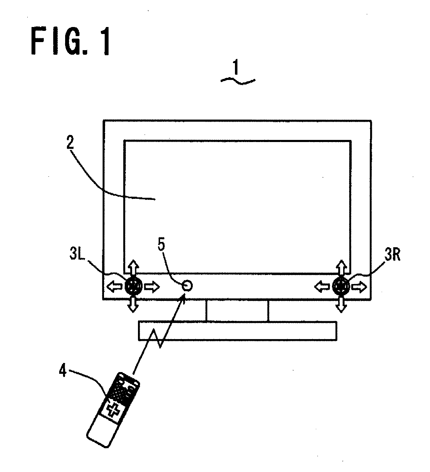

FIG. 1 shows a television receiver according to this embodiment. The television receiver 1 is a device that receives television signals distributed from a broadcast station, and displays images based on the television signals while outputting audio based on the television signals.

The television receiver 1 has: a display 2 to display images; two speakers 3L and 3R to output audio; a remote control 4 that is operated by a user to enter commands for various operations of the television receiver 1, and transmits infrared signals; a remote control receiver 5 that receives infrared signals transmitted from the remote control 4; and so on.

The speaker 3L is located at the lower left of the display 2. The speaker 3R is located at the lower right of the display 2. The orientation of the speakers 3L and 3R can be changed in four directions, up, down, left and right. By changing the orientation of the speakers 3L and 3R, the sound emission direction of the speakers 3L and 3R can be adjusted. The orientation of the speakers 3L and 3R are changed by operating the remote control 4. The remote control 4 serves as operation means that is operated by a user to change the orientation of the speakers 3L and 3R.

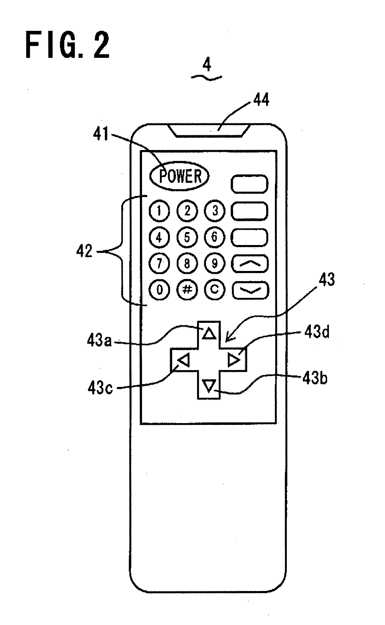

FIG. 2 shows the remote control 4 of the television receiver 1. The remote control 4 has: a power key 41, numeric keys 42, an arrow key 43, and so on, as operation keys operated by a user to enter commands for various operations of the television receiver 1; and an infrared transmitter 44 that transmits infrared signals when the operation keys are operated.

The power key 41 is a key pressed to turn on and off the television receiver 1. The numeric keys 42 are keys to select a number, which are pressed, for example, to select a television channel.

The arrow key 43 is a cross-shaped key operated to change the orientation of the speakers 3L and 3R. This arrow key 43 has four operation portions 43a, 43b, 43c, and 43d. More particularly, the four operation portions 43a, 43b, 43c, and 43d are combined as the cross-shaped arrow key 43.

The operation portion 43a is located above the center of the arrow key 43 and pressed to change the orientation of the speakers 3L and 3R upward. The operation portion 43b is located below the center of the arrow key 43 and pressed to change the orientation of the speakers 3L and 3R downward. The operation portion 43c is located on the left side of the center of the arrow key 43 and pressed to change the orientation of the speakers 3L and 3R to the left. The operation portion 43d is located on the right side of the center of the arrow key 43 and pressed to change the orientation of the speakers 3L and 3R to the right. In other wards, the operation portions 43a, 43b, 43c, and 43d correspond to the four directions, up, down, left, and right, of change in the orientation of the speakers 3L and 3R, and are adapted to be depressed individually.

When the operation keys are operated, the remote control 4 transmits infrared signals corresponding to the operations from the infrared transmitter 44.

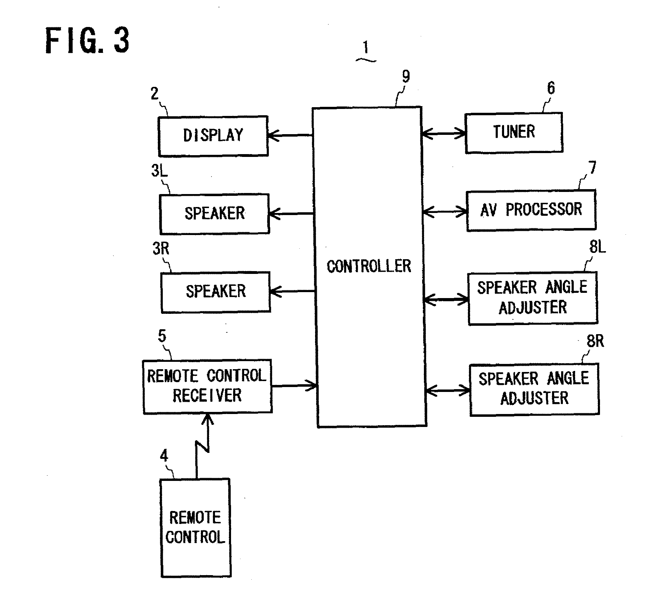

FIG 3 is an electrical block diagram of the television receiver 1. In addition to the above described components, the television receiver 1 has: a tuner 6; an audio/video (AV) processor 7; speaker angle adjusters 8L and 8R; a controller 9 including a CPU, which controls the operation of the television receiver 1, a ROM, and a RAM; and so on. The ROM in the controller 9 stores programs for control of the operation of the television receiver 1 and various kinds of data.

Under the control of the controller 9, the display 2 receives image signals to display images based on the image signals. Under the control of the controller 9, the speakers 3L and 3R receives audio signals to output audio based on the audio signals. When a user operates the remote control 4, the remote control 4 transmits infrared signals corresponding to the operation as described above. The remote control receiver 5 receives the infrared signals transmitted from the remote control 4 and converts the infrared signals to electrical signals. Then, the remote control receiver 5 outputs the received remote control signals corresponding to the user operation on the remote control 4.

Under the control of the controller 9, the tuner 6 receives television signals on a channel when the reception frequency is set to a frequency corresponding to the channel for the television signals. Under the control of the controller 9, the AV processor 7 processes signals received by the tuner 6 to produce image signals representing images (TV program images) based on the television signals and audio signals representing audio (TV program audio) based on the television signals. The image signals and the audio signals produced by the AV processor 7 are provided to the display 2 and the speakers 3L and 3R, under the control of the controller 9. Accordingly, the images based on the television signals are displayed on the display 2 while the audio based on the television signals are output from the speakers 3L and 3R.

The speaker angle adjuster 8L has a motor, a gear, and so on, and changes the orientation of the speaker 3L in the four directions, up, down, left, and right, under the control of the controller 9. Likewise, the speaker angle adjuster 8R has a motor, a gear, and so on, and changes the orientation of the speaker 3R in the four directions, up, down, left, and right, under the control of the controller 9. Speaker orientation changing means in claims includes the speaker angle adjusters 8L and 8R, and the controller 9.

The controller 9 determines how the remote control 4 has been operated based on received remote control signals output from the remote control receiver 5. Thereby, the controller 9 controls various operations of the television receiver 1 such as reception of television signals and adjustment of the sound emission direction in accordance with the user operation on the remote control 4.

Under the control of the controller 9, the sound emission direction is adjusted in the following manner. In response to a user operation on the remote control 4, the controller 9 changes the orientation of the speakers 3L and 3R by the speaker angle adjusters 8L and 8R for adjustment of the sound emission direction.

For the above adjustment, when one of the four operation portions 43a, 43b, 43c, and 43d of the arrow key 43 is pressed on the remote control 4, the controller 9 changes the orientation of the speakers 3L and 3R by a predetermined angle (for example five degrees) in the direction corresponding to the pressed operation portion. More particularly, when the operation portion 43a is pressed, the controller 9 changes the orientation of the speakers 3L and 3R upward, which is the direction corresponding to the operation portion 43a, by the predetermined angle. When the operation portion 43b is pressed, the controller 9 changes the orientation of the speakers 3L and 3R downward, which is the direction corresponding to the operation portion 43b, by the predetermined angle. When the operation portion 43c is pressed, the controller 9 changes the orientation of the speakers 3L and 3R to the left, which is the direction corresponding to the operation portion 43c, by the predetermined angle. When the operation portion 43d is pressed, the controller 9 changes the orientation of the speakers 3L and 3R to the right, which is the direction corresponding to the operation portion 43d, by the predetermined angle.

Each time one of the operation portions 43a, 43b, 43c, and 43d is pressed, the controller 9 changes the orientation of the speakers 3L and 3R by the predetermined angle (for example, five degrees) in the direction corresponding to the pressed operation portion. In other words, each time one of the operation portions 43a, 43b, 43c, and 43d is pressed, the controller 9 changes the orientation of the speakers 3L and 3R by the predetermined angle in the direction corresponding to the pressed operation portion from the orientation of the speakers 3L and 3R at that time (i.e., the orientation before the operation portion is pressed). In this manner, the sound emission direction is adjusted by changing the orientation of the speakers 3L and 3R.

According to the television receiver 1 configured as described above, a user can change the orientation of the speakers 3L and 3R in the four directions, up, down, left, and right, by operating the arrow key 43 on the remote control 4 so as to adjust the sound emission direction. Further, by pressing the operation portions 43a, 43b, 43c, and 43d of the arrow key 43 a desired number of times, a user can change the orientation of the speakers 3L and 3R by a desired angle in a desired direction so as to adjust the sound emission direction as desired.

Accordingly, when a user watching a TV program is at a position shifted from in front of the television receiver 1 (in front of the display 2), a user can direct the speakers 3L and 3R toward the user watching the TV program by using the remote control 4, thereby appropriately adjusting the sound emission direction so that the user can listen to the TV program audio better without turning up the volume.

Further, when a user who is watching a TV program and a user who is not watching the TV program are present in the same room where the television receiver 1 is placed, a user can direct the speakers 3L and 3R toward the user watching the TV program or direct the speakers 3L and 3R away from the user who is not watching the TV program. Thereby, the user can appropriately adjust the sound emission direction so as to allow the user who is watching the TV program to listen to the audio well while preventing the user who is not watching the TV program from being annoyed.

Besides, according to the television receiver 1 configured as described above, a user can change the orientation of the speakers for adjustment of the sound emission direction with easy operation of pressing the arrow key 43 on the remote control 4.

Further, when a user presses one of the operation portions 43a, 43b, 43c, and 43d of the arrow key 43, the orientation of the speakers 3L and 3R is changed in the direction corresponding to the pressed operation portion. Thus, with easier operation, a user can change the orientation of the speakers 3L and 3R in a desired direction for adjustment of the sound emission direction.

Each time a user presses one of the operation portions 43a, 43b, 43c, and 43d, the orientation of the speakers 3L and 3R is changed by the predetermined angle in the direction corresponding to the pressed operation portion. Accordingly, with easier operation, a user can change the orientation of the speakers 3L and 3R by a desired angle to adjust the sound emission direction.

The operation portions 43a, 43b, 43c, and 43d are combined as the cross-shaped arrow key 43 and correspond to the four directions, up, down, left, and right, that are directions of change in the orientation of the speakers 3L and 3R. This allows a user to easily understand the relation between the directions of change in the orientation of the speakers 3L and 3R and the operation portions 43a, 43b, 43c, and 43d. Accordingly, a user can more easily change the orientation of the speakers 3L and 3R in a desired direction for adjustment of the sound emission direction.

The present invention has been described above using a presently preferred embodiment, but those skilled in the art will appreciate that various modifications are possible. For example, it is also possible that, while one of the four operation portions is depressed, the controller continues to change the orientation of the speakers in the direction corresponding to the operation portion being depressed, and when the depressed operation portion is released, the controller stops changing the orientation of the speakers. Further, the orientations of the speakers may be changed individually for each speaker. The number of speakers is not limited to two. Instead, the television receiver may have three or more speakers. The four operation portions may be provided as separate keys instead of being combined as the arrow key.

This application is based on Japanese patent application 2008-114672 filed April 24, 2008, the contents of which are hereby incorporated by reference.

## Claims

1. A television receiver that receives television signals distributed from a broadcast station, and displays images based on the television signals on a display while outputting audio based on the television signals from a speaker, the television receiver comprising:
operation means that is operated by a user to change an orientation of the speaker; and
speaker orientation changing means for changing the orientation of the speaker in four directions, up, down, left, and right, when the operation means is operated.

2. The television receiver according to claim 1,
wherein the operation means has four operation portions corresponding to the four directions, up, down, left, and right, that are directions of change in the orientation of the speaker; and
wherein when one of the four operation portions is operated, the speaker orientation changing means changes the orientation of the speaker in a direction corresponding to the operated operation portion.

3. The television receiver according to claim 2,
wherein the four operation portions are adapted to be depressed individually; and
wherein while one of the four operation portions is depressed, the speaker orientation changing means continues to change the orientation of the speaker in a direction corresponding to the operation portion being depressed, and when the depressed operation portion is released, the speaker orientation changing means stops changing the orientation of the speaker.

4. The television receiver according to claim 2,
wherein the four operation portions are adapted to be depressed individually; and
wherein each time one of the four operation portions is pressed, the speaker orientation changing means changes the orientation of the speaker by a predetermined angle in a direction corresponding to the pressed operation portion.

5. The television receiver according to any one of claims 2 to 4,
wherein the four operation portions are combined as a cross-shaped arrow key.

6. The television receiver according to any one of claims 1 to 5,
wherein the speaker includes a plurality of speakers; and
wherein when the operation means is operated, the speaker orientation changing means changes orientations of the plurality of speakers individually for each speaker.
